# EUROPEAN PATENT SPECIFICATION

(11) **EP 1 461 704 B1**
(45) Date of publication and mention of the grant of the patent: **06.08.2014**
(21) Application number: 02795406.4
(22) Date of filing: 10.12.2002
(51) Int. Cl.: G06F 11/30, G06F 12/14, H04L 29/06

(54) **PROTECTING AGAINST MALICIOUS TRAFFIC**
SCHUTZ VOR BÖSWILLIGEM VERKEHR
PROTECTION CONTRE UN TRAFIC MALVEILLANT

(30) Priority: 10.12.2001 US 339900 P
(43) Date of publication of application: 29.09.2004
(73) Proprietor: Cisco Technology, Inc., San Jose, CA 95134-1706 (US)
(72) Inventor: AFEK, Yehuda, 45221 Hod Hasharon (IL); TZADIKARIO, Rafi, 44256 Kfar Saba (IL); TOUITOU, Dan, 52224 Ramat Gan (IL); BREMLER BAR, Anat, 58272 Holon (IL)
(74) Representative: Kazi, Ilya
(86) International application number: PCT/IL2002/000996
(87) International publication number: WO 2003/050644

(56) References cited:
- US-A- 6 088 803
- US-B1- 6 397 335
- US-B1- 6 513 122
- ANAGNOSTAKIS K G ET AL: "Efficient packet monitoring for network management", NOMS 2002. IEEE/IFIP NETWORK OPERATIONS AND MANAGEMENT SYMPOSIUM. ` MANAGEMENT SOLUTIONS FOR THE NEW COMMUNICATIONS WORLD'(CAT. NO.02CH37327) IEEE PISCATAWAY, NJ, USA, 2002, pages 423-436, XP002609911, ISBN: 0-7803-7382-0 Retrieved from the Internet: URL:ieeexplore.ieee.org> [retrieved on 2010-11-16]
- BAKOS G ET AL: "Early detection of Internet worm activity by metering ICMP destination unreachable messages", PROCEEDINGS OF THE INTERNATIONAL SOCIETY FOR OPTICAL ENGINEERING (SPIE), SPIE, USA, vol. 4708, 1 January 2002 (2002-01-01), pages 33-42, XP002342234, ISSN: 0277-786X, DOI: DOI:10.1117/12.479290
- CHO Y H ET AL: "Specialized hardware for deep network packet filtering", FIELD-PROGRAMMABLE LOGIC AND APPLICATIONS. RECONFIGURABLE COMPUTING IS GOING MAINSTREAM. 12TH INTERNATIONAL CONFERENCE, FPL 2002. PROCEEDINGS (LECTURE NOTES IN COMPUTER SCIENCE VOL.2438) SPRINGER-VERLAG BERLIN, GERMANY, 2002, pages 452-461, XP002609912, ISBN: 3-540-44108-5
- MARTIN ROESCH: 'Snort Users Manual Snort Release: 1.8.3', [Online] 06 November 2001, XP055015709 Retrieved from the Internet: <URL:http://www.forum-intrusion.com/snort/S nortUsersManual.pdf> [retrieved on 2012-01-04]
- JUNGWON KIM AND PETER BENTLEY: 'An Artificial Immune Model for Network Intrusion Detection' 7TH EUROPEAN CONGRESS ON INTELLIGENT TECHNIQUES AND SOFT COMPUTING (EUFIT'99), [Online] 13 September 1999, XP055042052 Retrieved from the Internet: <URL:http://citeseerx.ist.psu.edu/viewdoc/d ownload;jsessionid=820DD79869057603DE46853A 215EF505?doi=10.1.1.15.9405&rep=rep1&type=p df> [retrieved on 2012-10-24]
- PHILLIP A. PORRAS ET AL: 'Live Traffic Analysis of TCP/IP Gateways' PROCEEDINGS OF THE 1998 ISOC SYMPOSIUM ON NETWORK AND DISTRIBUTED SYSTEM SECURITY (NDSS'98), [Online] 01 March 2008, XP055042056 Retrieved from the Internet: <URL:http://www.sdl.sri.com/projects/emeral d/live-traffic.html> [retrieved on 2012-10-24]

## Description

### FIELD OF THE INVENTION

The present invention relates generally to computer networks, and specifically to methods and systems for protecting against malicious traffic in computer networks.

### BACKGROUND OF THE INVENTION

In a Denial-of-Service (DoS) attack, an attacker bombards a victim network or server with a large volume of message traffic. The traffic overload consumes the victim's available bandwidth, CPU capacity, or other critical system resources, and eventually brings the victim to a situation in which it is unable to serve its legitimate clients. Distributed DoS (DDoS) attacks can be even more damaging, as they involve creating artificial network traffic from multiple sources simultaneously. In a "conventional" massive-bandwidth attack, the source of the attack may be traced with the help of statistical analysis of the source Internet Protocol (IP) addresses of incoming packets. The victim can subsequently filter out any traffic originating from the suspect IP addresses, and can use the evidence to take legal action against the attacker. Many attacks, however, now use "spoofed" IP packets - packets containing a bogus IP source address - making it more difficult for the victim network to defend itself against attack.

In order to launch an effective DDoS attack, an attacker typically attempts to control a large number of servers on the Internet. One approach to gaining such control is to use "worms," which are programs that self-replicate across the Internet by exploiting security flaws in widely-used services. After taking control of a server, a worm often uses the server to participate in a DDoS attack. Recent well-known worms include Code Red (I and II) and Nimba. For example, Code Red I spread during the summer of 2001 by exploiting a security flaw in Microsoft® IIS web servers. Once it infected a server, the worm spread by launching 99 threads, each of which generated random IP addresses and attempted to compromise servers at these addresses. In addition to this self-replication, Code Red I self-activated simultaneously on infected servers to launch a coordinated DDoS attack on the www.whitehouse.gov domain.

In addition to the disruption caused to domains that are victims of a DDoS attack launched by a worm, the servers and networks infected by the worm often experience performance degradations. Such degradations are caused in part by the packets generated and received by an infected server as it attempts to discover and infect servers at random IP addresses (called "scanning"), and by the packets generating by the infected server when it participates in a DDoS attack. For example, an infected server may send a large volume of SYN request packets to random IP addresses, each of which may respond with a SYN-ACK response packet. Such traffic may consume a large portion of the bandwidth of the connection of the infected network with the Internet. Additionally, SYN requests are typically buffered by the sending server for a period of time, tying up server resources.

United States Patent 6,088,803 describes a system for virus checking a data object to be downloaded to a client device including the steps of retrieving a data object to be downloaded, scanning the data object for a computer virus, and downloading the data object to the client device if no computer virus is detected.

Snort Users Manual Snort Release: 1.8.3 by Martin Roesch, is a user manual that describes the SNORT packet logger and network intrusion detection system.

Live Traffic Analysis of TCP/IP Gateways Phillip A. Porras et al describes a variety of ways to extend both statistical an signature-based instrusion-detection analysis techniques to monitor network traffic.

### SUMMARY OF THE INVENTION

Aspects and examples of the invention are set out in the claims. Also described herein is a network guard system that detects and blocks incoming and/or outgoing packets generated by a worm. Typically, the guard system detects such infected packets by (a) checking whether the packets contain a known worm signature, and/or (b) monitoring the sources of the packets for anomalous traffic patterns that correspond to patterns associated with worm-generated traffic. Once the guard system detects a suspicious packet or traffic pattern, it may block all or a portion of the packets from the same source for a period of time or take other preventive action. Non-infected packets are forwarded to their intended destinations.

For some applications, the network guard system monitors incoming packets, in order to prevent a malicious source from establishing connections with servers within a protected area of a network. In some such embodiments of the present invention, a network protected with the network guard system designates a set of network addresses (such as IP addresses) assigned to the network as "trap" addresses. These trap addresses are assigned to one or more guard devices, but otherwise are not used by other elements of the network. When a packet addressed to such a trap address enters the protected network, the packet is forwarded to the assigned guard device, which analyzes the traffic. The guard device may determine that the traffic from a given source address is suspicious, based on the content or statistical properties of the traffic, for example. The guard device may then block or otherwise filter incoming traffic from the suspicious source address, to reduce the likelihood of servers within the protected area of a network becoming infected with a worm. Alternatively or additionally, the guard device may then begin monitoring all packets entering the protected area of the network. These techniques for protecting against incoming worm-generated traffic can reduce bandwidth consumption between the protected network and a wide-area network, such as the Internet. For example, these techniques may reduce outgoing traffic generated by elements in the protected area in response to the incoming traffic, such as SYN-ACK responses generated by internal servers when attempting to establish a handshake with infected external servers.

Alternatively or additionally, the network guard system monitors outgoing packets originating from servers in a protected area. Typically, the guard system detects an infected server by determining that the server is attempting to create a large number of connections to different addresses within a short time, or to create a connection with a non-existing address. By detecting and blocking infected outgoing packets, the guard system prevents servers infected with a worm from establishing specific types of connections with servers outside the protected area. This technique can also reduce bandwidth consumption between the protected network and a wide-area network, such as the Internet, (a) by reducing outbound traffic generated by servers infected with a worm, both when the servers attempt to propagate the worm and when they participate in a DDoS attack, and (b) by reducing inbound traffic generated in response to the malicious outbound traffic, such as SYN-ACK responses generated by external servers when attempting to establish a handshake with infected internal servers. Additionally, upon detecting an infected server, the guard system typically generates a network administrator alert, so that the administrator can take appropriate action, such as cleaning infected servers.

The techniques of worm-generated traffic detection and diversion described herein may be used on their own, or in combination with other, complementary techniques for preventing DDoS attacks. Such techniques are described, for example, in the above-referenced US Patent Application Publication 20020083175, and in US Patent Application 10/232,993, filed August 29, 2002, entitled, "Protecting Against Distributed Denial of Service Attacks," which are assigned to the assignee of the present patent application and are incorporated herein by reference.

There is therefore provided, in accordance with an embodiment of the present invention, a method for screening packet-based communication traffic, including:
receiving at least a first data packet sent over a network from a source address to a destination address;
making a determination, by analyzing the first data packet, that the first data packet was generated by a worm; and
in response to the determination, blocking a second data packet sent over the network from the source address.

Making the determination may include comparing an attribute of the first data packet with a set of attributes of known worm-generated packets, and blocking the first data packet when the attribute of the first data packet is found to match one of the attributes in the set.

In an embodiment, blocking the second data packet includes blocking the second data packet during a period of time commencing with making the determination that the first data packet was generated by the worm, and not blocking the second data packet thereafter.

In an embodiment, the destination address is located within a protected area of the network, and receiving the first data packet includes receiving the first data packet from a source located outside the protected area. Alternatively, the source address belongs to a network element located within a protected area of the network, the destination address is located outside the protected area, and receiving the first data packet includes receiving the first data packet within the protected area.

Making the determination may include generating an administrator alert that the first data packet was generated by the worm.

In an embodiment, the first data packet .has a port designation, and making the determination includes determining that the port designation does not correspond to an application running at the destination address. Alternatively or additionally, a server for an application resides at the destination address, and making the determination includes determining that the first data packet does not correspond to the application.

In an embodiment, receiving the first data packet includes receiving an Internet Protocol (IP) packet, and making the determination includes analyzing a pattern of a sequence number of the IP packet Alternatively or additionally, receiving the first data packet includes receiving a Transport Control Protocol (TCP) SYN packet. Receiving the SYN packet may include receiving multiple SYN packets addressed to multiple, respective destination addresses, and making the determination includes detecting a pattern of address scanning characteristic of the worm.

In an embodiment, making the determination includes determining that the destination address is invalid. Making the determination may include designating one or more addresses as trap addresses, and determining that the destination address is one of the trap addresses. Making the determination may also include analyzing a rate of arrival of data packets sent from the source address to one or more of the trap addresses, so as to determine whether the packets were generated by the worm.

In an embodiment, making the determination includes storing on a blacklist the source address of the first data packet, and blocking the second data packet includes blocking the second data packet in response to the blacklist. Storing on the blacklist may include removing the source address of the first data packet from the blacklist when it is determined that a rate of packets received from the source address has decreased.

Receiving at least the first data packet may include receiving multiple data packets from the source address, which are addressed to a plurality of respective destination addresses, and making the determination includes analyzing the multiple data packets sent from the source address. Making the determination may include analyzing a rate of arrival of the data packets. Alternatively or additionally, making the determination includes comparing a pattern of the destination addresses with at least one pattern associated with known worm-generated traffic. Receiving the data packets from the source address may include receiving the data packets from a plurality of source addresses belonging to a subnetwork, and blocking the second data packet includes blocking further data packets sent over the network from the subnetwork.

In an embodiment, receiving the first data packet includes intercepting the first data packet before the first data packet reaches the destination address, and the method includes delivering the first data packet to the destination address when it is determined that the first data packet was not generated by the worm. Receiving the first data packet may include receiving an Internet Protocol (IP) packet addressed to a particular port, and intercepting the first data packet includes intercepting the first data packet responsively to the particular port to which the IP packet is addressed. Intercepting the first data packet may include intercepting the first data packet only if the first data packet includes a Transport Control Protocol (TCP) SYN packet and the first data packet is addressed to port 80.

There is also provided, in accordance with an embodiment of the present invention, a method for analyzing packet-based communication traffic, including:
receiving multiple data packets sent over a network from a source address and addressed to a plurality of respective destination addresses;
determining a rate of sending the data packets to the plurality of destination addresses from the source address; and
in response to the rate, designating the source address as a source of malicious traffic.

Receiving the data packets may include receiving Transport Control Protocol (TCP) SYN packets. Designating the source address may include designating the source address as a generator of worm-generated traffic.

In an embodiment, receiving the data packets includes receiving Internet Protocol (IP) packets having respective port designations, and determining the rate includes determining the rate of sending the data packets whose respective port designations do not correspond to applications running at the destination addresses. Determining the rate may include determining the rate of sending data packets addressed to the destination addresses at which reside servers for an application, which application is different from that specified in the packets.

There is further provided, in accordance with an embodiment of the present invention, a method for analyzing packet-based communication traffic, including:
designating one or more network addresses as trap addresses;
receiving a data packet sent over the network from a source address to one of the trap addresses; and
in response to receiving the packet, designating the source address as a source of malicious traffic.

In an embodiment, receiving the data packet includes receiving a plurality of data packets sent over the network from the source address to one or more of the trap addresses, and designating the source address includes analyzing a rate of arrival of the data packets sent from the source address to the one or more of the trap addresses. Designating the source address may include designating the source address as a generator of worm-generated traffic.

There is still further provided, in accordance with an embodiment of the present invention, a method for analyzing packet-based communication traffic, including:
designating one or more network addresses as trap addresses;
receiving a data packet sent over the network to one of the trap addresses; and
in response to receiving the packet, initiating diversion of further data packets sent over the network from sources outside a protected area of the network, so as to prevent malicious traffic from reaching the protected area of the network.

Initiating diversion may include initiating diversion so as to prevent worm-generated traffic from reaching the protected area of the network. In an embodiment, initiating diversion includes determining that one of the further data packets was generated by a worm, and, in response to the determination, blocking the delivery of the packet. Receiving the data packet may include receiving a plurality of data packets sent over the network from a source address to one or more of the trap addresses, and initiating diversion includes analyzing a rate of arrival of the data packets sent from the source address to the one or more of the trap addresses.

There is additionally provided, in accordance with an embodiment of the present invention, a method for analyzing packet-based communication traffic, including:
receiving a data packet sent over a network from a source address to a destination address;
comparing an attribute of the data packet with a set of attributes of known worm-generated packets; and
designating the source address as a source of worm-generated traffic when the attribute of the packet is found to match one of the attributes in the set.

The attribute may include a length of the data packet or a signature of the packet.

There is yet additionally provided, in accordance with an embodiment of the present invention, apparatus for screening packet-based communication traffic, including a guard device, which is adapted to receive at least a first data packet sent over a network from a source address to a destination address, to make a determination, by analyzing the first data packet, that the first data packet was generated by a worm, and, in response to the determination, to block a second data packet sent over the network from the source address.

There is also provided, in accordance with an embodiment of the present invention, apparatus for analyzing packet-based communication traffic, including a guard device, which is adapted to receive multiple data packets sent over a network from a source address and addressed to a plurality of respective destination addresses, to determine a rate of sending the data packets to the plurality of destination addresses from the source address, and, in response to the rate, to designate the source address as a source of malicious traffic.

There is further provided, in accordance with an embodiment of the present invention, apparatus for analyzing packet-based communication traffic, including a guard device, which is adapted to designate one or more network addresses as trap addresses, to receive a data packet sent over the network from a source address to one of the trap addresses, and, in response to receiving the packet, to designate the source address as a source of malicious traffic.

There is still further provided, in accordance with an embodiment of the present invention, apparatus for analyzing packet-based communication traffic, including a guard device, which is adapted to designate one or more network addresses as trap addresses, to receive a data packet sent over the network to one of the trap addresses, and, in response to receiving the packet, to initiate diversion of further data packets sent over the network from sources outside a protected area of the network, so as to prevent malicious traffic from reaching the protected area of the network.

There is additionally provided, in accordance with an embodiment of the present invention, apparatus for analyzing packet-based communication traffic, including a guard device, which is adapted to receive a data packet sent over a network from a source address to a destination address, to compare an attribute of the data packet with a set of attributes of known worm-generated packets, and to designate the source address as a source of worm-generated traffic when the attribute of the packet is found to match one of the attributes in the set.

There is yet additionally provided, in accordance with an embodiment of the present invention, a computer software product for screening packet-based communication traffic, the product including a computer-readable medium in which program instructions are stored, which instructions, when read by a computer, cause the computer to receive at least a first data packet sent over a network from a source address to a destination address, to make a determination, by analyzing the first data packet, that the first data packet was generated by a worm, and, in response to the determination, to block a second data packet sent over the network from the source address.

There is also provided, in accordance with an embodiment of the present invention, a computer software product for analyzing packet-based communication traffic, the product including a computer-readable medium in which program instructions are stored, which instructions, when read by a computer, cause the computer to receive multiple data packets sent over a network from a source address and addressed to a plurality of respective destination addresses, to determine a rate of sending the data packets to the plurality of destination addresses from the source address, and, in response to the rate, to designate the source address as a source of malicious traffic.

There is further provided, in accordance with an embodiment of the present invention, a computer software product for analyzing packet-based communication traffic, the product including a computer-readable medium in which program instructions are stored, which instructions, when read by a computer, cause the computer to designate one or more network addresses as trap addresses, to receive a data packet sent over the network from a source address to one of the trap addresses, and, in response to receiving the packet, to designate the source address as a source of malicious traffic.

There is still further provided, in accordance with an embodiment of the present invention, a computer software product for analyzing packet-based communication traffic, the product including a computer-readable medium in which program instructions are stored, which instructions, when read by a computer, cause the computer to designate one or more network addresses as trap addresses, to receive a data packet sent over the network to one of the trap addresses, and, in response to receiving the packet, to initiate diversion of further data packets sent over the network from sources outside a protected area of the network, so as to prevent malicious traffic from reaching the protected area of the network.

There is additionally provided, in accordance with an embodiment of the present invention, a computer software product for analyzing packet-based communication traffic, the product including a computer-readable medium in which program instructions are stored, which instructions, when read by a computer, cause the computer to receive a data packet sent over a network from a source address to a destination address, to compare an attribute of the data packet with a set of attributes of known worm-generated packets, and to designate the source address as a source of worm-generated traffic when the attribute of the packet is found to match one of the attributes in the set.

The present invention will be more fully understood from the following detailed description of embodiments thereof, taken together with the drawings in which:

### BRIEF DESCRIPTION OF THE DRAWINGS

Fig. 1 is a block diagram that schematically illustrates a network guard system, in accordance with an embodiment of the present invention;
Fig. 2 is a block diagram that schematically illustrates a network guard system deployed by an Internet Service Provider (ISP), in accordance with an embodiment of the present invention;
Fig. 3 is a flow chart that schematically illustrates a method for detecting worm-generated traffic, in accordance with an embodiment of the present invention;
Fig. 4 is a flow chart that schematically illustrates a method for screening and blocking traffic, in accordance with an embodiment of the present invention; and
Fig. 5 is a flow chart that schematically illustrates another method for detecting worm-generated traffic, in accordance with an embodiment of the present invention.

### DETAILED DESCRIPTION OF EMEBODIMENTS

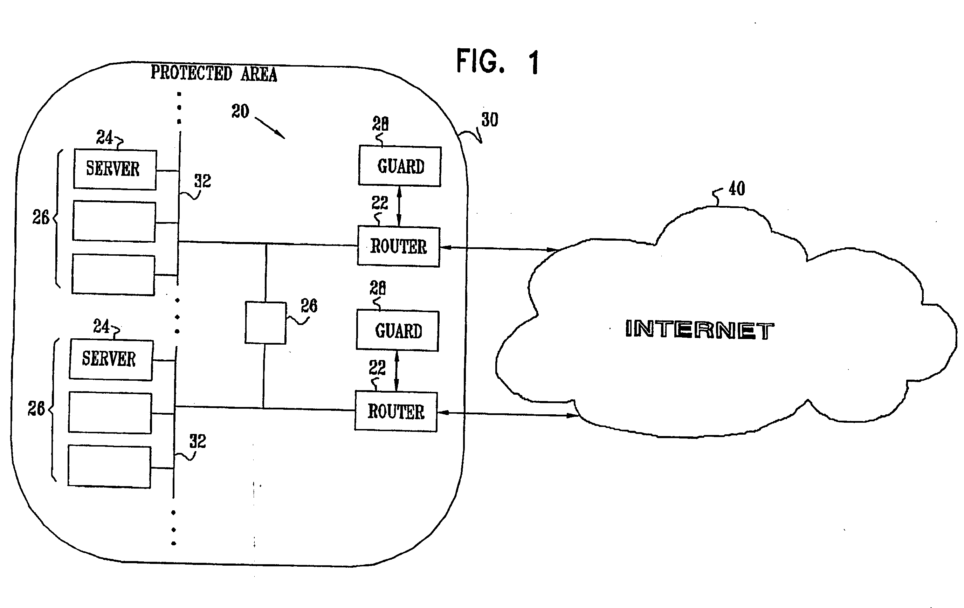

Fig. 1 is a block diagram that schematically illustrates a network guard system 20, in accordance with an embodiment of the present invention. A protected area 30 of a network communicates with a wide-area network (WAN) 40, typically the Internet, through one or more routers 22. Protected area 30 comprises various network elements 26, such as servers 24, clients, switches, internal routers, and bridges, typically connected by one or more local-area networks (LANs) 32. Typically, although not necessarily, protected area 30 comprises a private network, such as an enterprise or campus network, or a network operated by an Internet Service Provider (ISP), as described below.

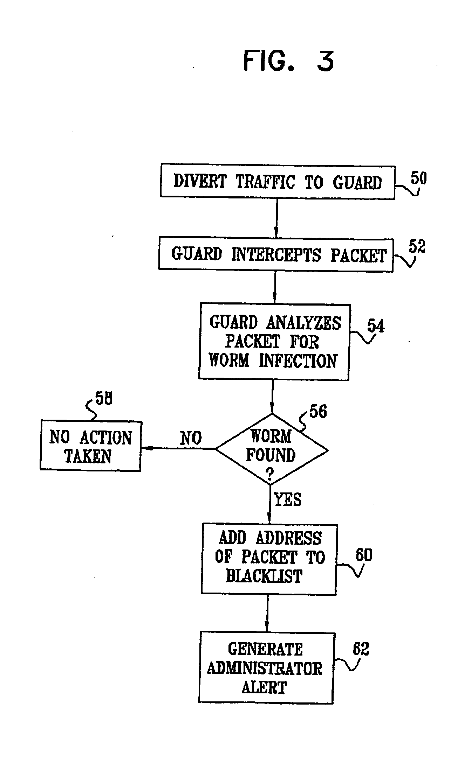

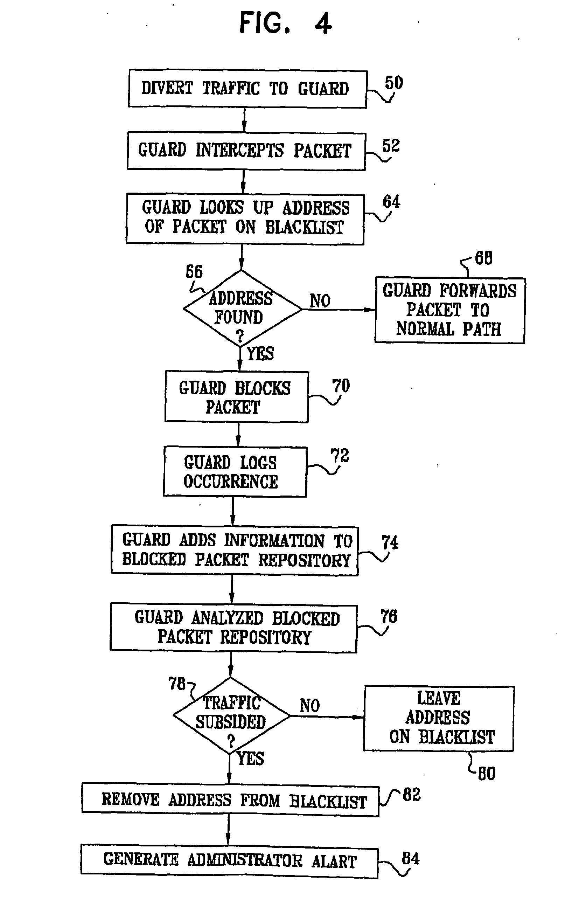

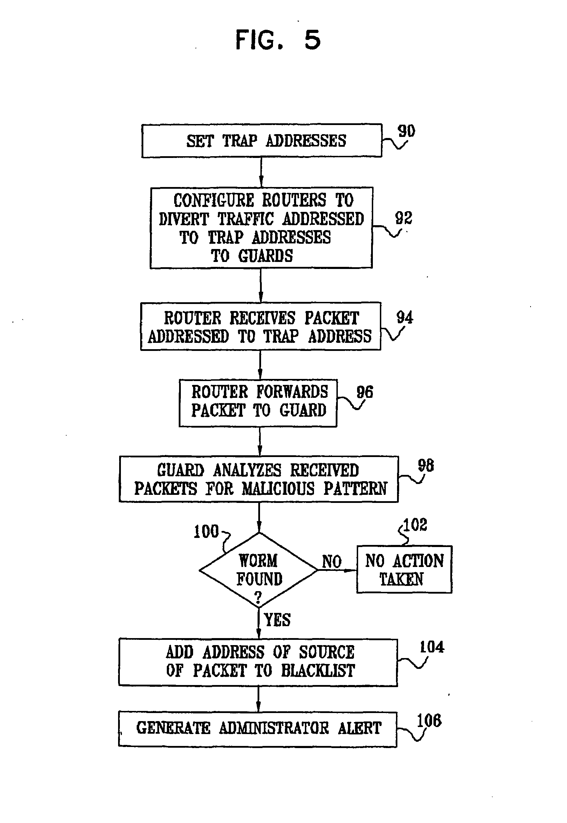

To prevent the infection of servers 24 with a worm, a guard device 28 intercepts incoming packets from WAN 40 that are addressed to network elements 26. Guard device 28 analyzes these incoming packets in order to detect packets that are suspected of being infected with a worm, typically using techniques described hereinbelow with reference to Figs. 3 and 5. Once an infected packet or traffic pattern has been detected, guard device 28 blocks all or a portion of the packets from the same source for a period of time, typically using techniques described hereinbelow with reference to Fig. 4. Non-infected packets are forwarded to their intended destinations.

Alternatively or additionally, guard device 28 monitors outgoing packets sent from servers 24 via WAN 40 to network elements outside protected area 30. By detecting and blocking infected outgoing packets, guard device 28 prevents servers 24 infected with a worm from establishing connections with servers outside protected area 30. As a result, infected servers 24 are not able to compromise outside servers or to participate in a DDoS attack on network elements outside protected area 30. Blocking such infected traffic also relieves pressure on the links between routers 22 and WAN 40, so that legitimate traffic is not impeded by malicious activity.

Guard device 28 may perform these packet screening and diversion functions at all times, or it may alternatively become active only under stress conditions, in which a worm attack on or by servers 24 is expected or suspected. For example, guard device 28 may become active when an unusually large number of incoming SYN request packets is detected, when other traffic statistics indicate that an attack may be in progress, when worm-generated traffic has been detected using "trap" addresses, as described hereinbelow with reference to Fig. 5, and/or when a network administrator is aware that a worm is active over the Internet.

Typically, guard device 28 comprises a general-purpose computer, which is programmed in software to carry out the functions described herein. The software may be downloaded to the computer in electronic form, over a network, for example, or it may alternatively be supplied to the computer on tangible media, such as CD-ROM. Further alternatively, guard device 28 may be implemented in dedicated hardware logic, or using a combination of hardware and software elements. The guard device may be a standalone unit, or it may alternatively be integrated with other communication or computing equipment, such as router 22, a firewall, or an intrusion detection system (not shown).

In practical applications, one or more guard devices 28 may be used to protect a cluster of servers 24, or they may be used to protect an entire LAN, intranet or a collection of servers whose traffic is diverted to the guard devices. The guard functionality may be distributed among multiple guard devices 28, at one or more access points to protected area 30. In applications using more than one guard device, the guard devices may share one or more common data repositories, or may otherwise communicate with each other, such as for performing aggregated statistical analysis and/or maintaining a common record of suspected sources of malicious packets. The guard devices may be deployed in configurations similar to firewalls known in the art. Preferably, the guard devices have sufficient processing capacity so that they do not themselves become a bottleneck in the case of a worm attack. While certain techniques are described herein with respect to screening incoming and/or outgoing traffic to/from servers 24, these techniques may also be used to screen incoming and/or outgoing traffic to/from other network elements 26, such as client computers, that are capable of being infected with a worm. Routers 28 may comprise routers of the type commercially available and commonly used on an IP network, or other network elements capable of redirecting traffic and otherwise providing the functions commonly performed by routers.

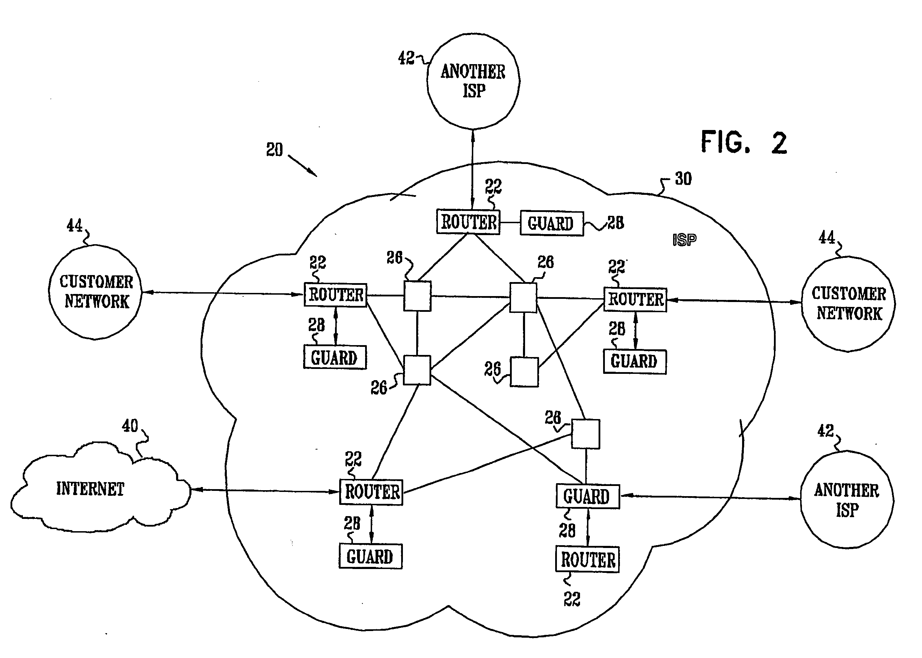

Fig. 2 is a block diagram that schematically illustrates a network guard system 20 deployed on protected area 30 of a network belonging to an Internet Service Provider (ISP), in accordance with an embodiment of the present invention. Protected area 30 typically communicates through one or more routers 22 with external networks, such as (a) a public wide-area network (WAN) 40, typically the Internet, as noted above, as well as (b) other ISPs 42, either at private or public peering points, and (c) networks 44 of customers. Protected area 30 comprises various network elements 26, such as routers, switches, bridges, servers, and clients. One or more guard devices 28 process incoming and/or outgoing packets from/to external networks. Typically, each guard device is connected in a lollipop fashion to one of the ports of a corresponding router. The router passes certain incoming and/or outgoing packets (or, in some circumstances, all incoming and/or outgoing packets) to the guard device for analysis, based on preprogrammed routing criteria. Guard devices 28 analyze the packets in order to prevent the spread of worms and/or worm-generated traffic between different external networks and between external networks and network elements 26, using the techniques described herein.

Although in Figs. 1 and 2 each guard device 28 is shown connected directly with a single adjacent router 22, alternative configurations will be apparent to those skilled in the art, having read the present patent application. For example, there need not be a one-to-one correspondence between guard devices and routers, and guard devices and routers may be separated by physical or network distance, such as by a switch.

Fig. 3 is a flow chart that schematically illustrates a method for detecting worm-generated traffic, in accordance with an embodiment of the present invention. The method may be carried out at all times, or only at certain times or under certain circumstances, depending on the configuration of guard device and router in question. For example, the method may be initiated when a stress condition has been manually or automatically detected, or from time to time for sampling of traffic. Upon initiation, all or selected types of traffic are diverted from router 22 to guard device 28, at a traffic diversion step 50. Preferably, only types of traffic that could potentially carry a worm are diverted. For example, responsive to specific network configurations and conditions, only traffic to ports corresponding to certain applications may be diverted (e.g., port 80 for HTTP applications, or port 21 for FTP applications). To minimize the diversion of traffic, for some applications it may be sufficient to divert only port 80 SYN packets, which diversion enables the blocking of the spread of worms over applications that run over HTTP.

In some embodiments of the present invention, diversion is effected using one or more of the following techniques:
- The Web Cache Coordination Protocol (WCCP) version 1 (promulgated by Cisco® Systems, San Jose, California) may be used to seamlessly divert all port 80 traffic to guard device 28.
- For routers 22 that support WCCP version 2, diversion may be effected using more specific selection criteria, if appropriate. For example, all SYN requests (or all SYN requests to port 80), or only SYN requests or other traffic from particular source IP addresses may be diverted.
- Cisco's Policy Based Routing (PBR) may be used to redirect traffic based on criteria specified using access control lists (ACLs), such as destination port, type of packet (e.g., SYN request), or the interface on which the traffic was received.
- Diversion may be effected through the issuance of Border Gateway Protocol (BGP) announcements to reroute traffic from its intended recipient to guard device 28.
Other diversion techniques described in the above-referenced US Patent Application Publication 20020083175, or otherwise known in the art, such as those used for firewalls, may also be used. The diversion techniques of the present invention may be implemented in conjunction with further diversion techniques described in US Patent Application Publication 20020083175.

Returning now to Fig. 3, after traffic has been diverted, guard device 28 intercepts all diverted packets, at a packet interception step 52. Guard device 28 analyzes the intercepted packets, individually and/or in aggregate, in order to detect packets that are suspected of being infected with a worm or generated by a worm, at a packet analysis step 54. Such infected packets may carry the worm code itself, and/or they may have been generated by a worm in order to scan for vulnerable servers or prepare the servers to receive the worm code. Additionally, infected packets (typically, primarily outgoing packets) may have been generated by a worm-infected server 24 participating in a DDoS attack.

One or more of the following techniques are typically used for analyzing the packets, depending upon the particular warning in effect, or as determined by a network administrator:
- Destination addresses of packets are analyzed to detect patterns indicative of malicious activity. Packets are grouped by source address or by subnetwork source address, and guard device 28 performs one or more of the following analyses:
   ■ According to a first method of analysis, an unusually high rate of packets, such as SYN packets, from the same source or subnetwork source address to multiple destination addresses is interpreted as an indication of worm-generated "scanning" traffic. The analysis may exclude from suspicion sources that normally exhibit such behavior, such as proxy servers, by comparing their activity to their measured baseline activity.
   ■ According to a second method of analysis, an anomalous pattern of destination addresses from the same source or subnetwork source is interpreted as an indication of worm-generated traffic. For example, the anomalous pattern may correspond to the malicious scanning pattern of a known worm, such as Code Red or Nimba. Alternatively, the anomalous pattern may be similar to known or anticipated patterns of behavior of worms.
   ■ According to a third method of analysis, packets addressed to invalid destinations, such as non-existing destination addresses, or destination addresses without a server, are considered highly likely to be worm-generated.
   ■ According to a fourth method of analysis, an unusually high rate of packets, typically SYN packets, for a particular application or port, when addressed to destinations that are not servers for the particular application or port, is interpreted as a likely indication of worm-generated traffic. For example, such SYN packets may be addressed either to port 80 of devices that are not HTTP servers, or to addresses not in use.
   ■ According to a fifth method of analysis, parameters of SYN requests or request messages are statistically analyzed to detect patterns indicative of behavior of worm-infected sources. For example, such parameters may include sequence numbers used by a source.
- Individual packets are analyzed to detect a signature of a known worm. Preferably, in order to efficiently check packets, packet size is first checked against known worm-bearing packet sizes. Packets with matching sizes are further screened by checking for digital patterns of known worms within the message body. A single occurrence of a known worm is sufficient to definitively identify a malicious source.
- Destination addresses of packets are analyzed to detect invalid addresses, which may be indicative of worm-generation of the packets. For example, there are many segments of Internet IP addresses that are well-known to be unused (e.g., address reserved for testing or multicasting). Additionally, the guard addresses may maintain an up-to-date list of Internet IP addresses that are not currently allocated. Furthermore, addresses designated as "trap" addresses, as described hereinbelow with reference to Fig. 5, are known to be invalid.
These techniques are generally effective for detecting worm-generated or worm-bearing traffic of both incoming and outgoing traffic. For some applications, some or all of these analysis techniques are implemented using statistical collection and intelligent learning techniques described in the above-referenced US Patent Application Publication 20020083175, *mutatis mutandis.*

Continuing with the method of Fig. 3, after performing the analysis, a determination is made regarding whether a worm-infected source has been identified, at a worm found checking step 56. If a worm has not been found, the guard device takes no action with respect to the intercepted packet, at a no action step 58. On the other hand, if a worm has been identified, the source address or subnetwork source address, as the case may be, is added to a blacklist of suspected or known worm-infected sources, at a blacklist step 60. The blacklist is stored in a repository, such as a database. (Alternatively, substantially any suitable memory device and data structure may be used for storing blacklist, and not only a database.) When multiple guard devices are deployed in area 30, they preferably, but not necessarily, share a common blacklist, in order to enable more complete blocking of blacklisted sources.

After adding the infected source to the blacklist, guard device 28 typically generates a network administrator alert and/or log entry, at an alert generation step 62. An administrator can use this information to take preventive or corrective steps. For example, when a worm has been detected in outgoing traffic (i.e., a worm infecting a server 24 within protected area 30), the administrator can clean the infected server and install an appropriate patch to correct the security fault that created the vulnerability to infection. In some instances, particularly when a worm has been detected in incoming traffic, an administrator may wish to configure one or more of routers 22 and/or firewalls to block the malicious source directly, without the use of guard devices 28.

Worm scanners (worms configured to scan for vulnerable servers by sending packets to multiple addresses) sometimes use spoofed IP packets, as described in the Background section hereinabove. As a result, a guard device may determine that a certain source address is worm-infected, when in fact the source address was only spoofed by a worm located elsewhere on the WAN. A guard device thus may under certain circumstance erroneously block the source addresses of innocent, non-infected clients or servers. In an embodiment of the present invention, the guard devices employ anti-spoofing mechanisms to prevent such erroneous blocking, such as anti-spoofing mechanisms described in the above-mentioned patent applications, or other techniques known in the art, such as SYN cookies or RST cookies.

Fig. 4 is a flow chart that schematically illustrates a method for screening and blocking traffic, in accordance with an embodiment of the present invention. As in the method described with reference to Fig. 3, the method is initiated at traffic diversion step 50, in accordance with the configuration of guard device 28. For some applications, the method of Fig. 4 is initiated simultaneously with the initiation of the method of Fig. 3. Alternatively, the method of Fig. 4 is initiated only when the blacklist contains at least one source address. Typically, when both the method of Fig. 3 and the method of Fig. 4 have been initiated, the two methods run in parallel processes, either on the same or different guard devices. Typically, the same types of traffic are diverted in both the methods of Fig. 3 and Fig. 4, although for some applications a broader or narrower set of packets is diverted in the method of Fig. 4 than in the method of Fig. 3. Diversion is typically effected using one or more of the methods described hereinabove with reference to Fig. 3.

After traffic has been diverted, guard device 28 intercepts all diverted packets, at packet interception step 52. Guard device 28 looks up the source address or subnetwork source address of each packet on the blacklist, at a blacklist look-up step 64. Guard device 28 determines whether the address of the packet is on the blacklist, at an address check step 66. If the address of the packet is not found on the blacklist, the guard device forwards the packet on its normal path to its intended destination address, at a forward packet step 68.

On the other hand, if the address of the packet is found on the blacklist, guard device 28 blocks the further transmission of the packet, at a block step 70. Typically, the guard device simply discards the blocked packet, but alternatively, the guard device may analyze the packet contents (and may even take action to deliver the packet or remove it from the blacklist if the packet contents are found to be legitimate). Alternatively, at step 70 the guard device blocks transmission only of packets attempting to establish specific types of connections with servers outside the protected area. The guard device typically logs the receipt and blocking of the packet, at a log step 72. The logs generated at this step can be used by a system administrator for reporting or analysis. The guard device also adds information regarding the blocked packet to a blocked packet repository, such as a database, at a information recording step 74. Such information preferably includes a count of the number of packets blocked from each source address. When more than one guard device 28 is used, the multiple guard devices may share a common blocked packet repository, in order to enable broader statistical analysis of blockage patterns.

At a repository analysis step 76, at least one of the guard devices continuously or periodically analyzes the data in the blocked packet repository, in order to determine if the attack from a source or subnetwork source address has concluded. The guard device typically determines that an attack has concluded by detecting whether traffic from the source has subsided for a certain period of time, at a traffic subsidence check step 78. If malicious traffic has not subsided, the guard device leaves the source address on the blacklist, at a leave on blacklist step 80. On the other hand, if the traffic has subsided for a sufficient period of time, the guard device removes the source address from the blacklist, at a remove from blacklist step 82. Typically, the guard device generates an administrator alert or log entry when a source address is removed from the blacklist, at an administrator alert step 84.

Fig. 5 is a flow chart that schematically illustrates another method for detecting worm-generated traffic, in accordance with an embodiment of the present invention. This method may be used as a stand-alone detection method, or may be used in combination with other detection methods, such as the detection method described hereinabove with reference to Fig. 3. The method of Fig. 4 may be used to screen and block traffic from source addresses added to the blacklist by the method of Fig. 5. Alternatively, other methods may be used for screening and blocking traffic from sources identified by the method of Fig. 5.

In this method, a set of network addresses (such as IP addresses) assigned to protected area 30 (Figs. 1 and 2) are designated as "trap" addresses, at a set trap step 90. The trap addresses are addresses that are.routed to routers 22 by WAN 40, but are not in use by any of devices 26. Thus, any traffic addressed to these trap addresses is considered suspicious. Routers 22 are configured to divert traffic addressed to the trap addresses to at least one of guard devices 28, at a diversion step 92. Typically, diversion is effected by statically configuring the routers to divert to the guard devices all traffic with these destination addresses. Alternatively, other diversion methods may be used, as noted hereinabove with reference to Fig. 3.

When a packet addressed to a trap address enters protected area 30, the packet is received by one of routers 22, at a router receipt step 94. The router forwards the packet to a guard device, at a forwarding step 96. At an analysis step 98, the guard device analyzes the packet to determine whether it is indicative of worm activity. For example, the guard device may perform a statistical analysis on packets received from the same source or subnetwork source address, using information about the packet just received, combined with information about previously-received packets recorded in a statistical repository, as described hereinbelow with reference to step 102. According to one method for detecting traffic generated by a worm scanner, an unusually high number or rate of packets sent to the trap addresses from a single source or subnetwork source address is interpreted as an indication of worm activity. Alternatively or additionally, one or more of the worm detection methods described herein above with reference to packet analysis step 54 of Fig. 3 may be used for detecting traffic generated by a worm scanner and/or by a worm participating in a DDoS attack.

After performing the analysis, a determination is made regarding whether a worm-infected source has been identified, at a worm found checking step 100. If a worm has not been found, the guard device takes no action with respect to the trapped packet, at a no action step 102. On the other hand, if a worm has been identified, the source address or subnetwork source address, as the case may be, is added to a blacklist of suspected or known worm-infected sources, at a blacklist step 104, in a manner similar to that described above with reference to step 60, in Fig. 3. For applications utilizing the detection methods of Figs. 3 and 5 in combination, infected source addresses may be stored on a common blacklist.

Alternatively, when a worm has been identified, the source address is not added to the blacklist, and, instead, the guard device initiates diversion of traffic from the source address to one or more guard devices for screening, but not necessarily blocking. Alternatively or additionally, when a worm has been identified, the guard device initiates diversion of all traffic entering the protected area of the network (including traffic from addresses other than the infected source address) to one or more guard devices for screening and possible blocking.

After adding the infected source to the blacklist or diverting traffic, guard device 28 typically generates a network administrator alert and/or log entry, at an alert generation step 106. An administrator can use this information to take preventive or corrective steps, such as those described hereinabove with reference to step 62 of Fig. 3.

Although the embodiments described herein make reference to specific communication protocols and conventions, the principles of the present invention may similarly be applied in other data communication contexts. For example, techniques described herein may be applied to protecting against worm-generated traffic sent over SMTP.

It will thus be appreciated that the embodiments described above are cited by way of example.

## Claims

1. A method for screening packet-based communication traffic, comprising:
from time to time, to sample the traffic, or in response to a detected condition, initiating diversion (50) of packet-based communication traffic from a router (22) to a guard device (28);
receiving, at the guard device, at least a first data packet sent over a network (40) from a source address to a destination address;
making, at the guard device, a determination, by analyzing the first data packet, that the first data packet was generated by a worm; and
in response to the determination, blocking (70) , at the guard device, a second data packet sent over the network from the source address.

2. A method according to claim 1, wherein making the determination comprises:
comparing an attribute of the first data packet with a set of attributes of known worm-generated packets; and blocking the first data packet when the attribute of the first data packet is found to match one of the attributes in the set, wherein the attribute comprises at least one of a length of the data packet and a signature of the packet.

3. A method according to claim 1, wherein the first data packet has a port designation, and wherein making the determination comprises determining that the port designation does not correspond to an application running at the destination address.

4. A method according to claim 1, wherein a server for an application resides at the destination address, and wherein making the determination comprises determining that the first data packet does not correspond to the application.

5. A method according to claim 1, wherein receiving the first data packet comprises receiving an Internet Protocol, IP, packet, and wherein making the determination comprises analyzing a pattern of a sequence number of the IP packet.

6. A method according to any one of claims 1-5, wherein making, the determination comprises determining that the destination address is invalid.

7. A method according to claim 6, wherein making the determination comprises designating one or more addresses as trap addresses (90), and determining that the destination address is one of the trap addresses.

8. A method according to claim 7, wherein blocking the data packet comprises, in response to determining that the destination address of the first data packet is one of the trap addresses, initiating diversion (96) of further data packets sent over the network from sources outside a protected area of the network, so as to prevent malicious traffic from reaching the protected area of the network.

9. Apparatus for screening packet-based communication traffic, comprising a router (22) and a guard device (28),
wherein the router (22) is adapted to divert, from time to time, to sample the traffic, or in response to a detected condition, packet-based communication traffic to a guard device (28), and the guard device(28) is adapted to
receive at least a first data packet sent over a network (40) from a source address to a destination address, to make a determination, by analyzing the first data packet, that the first data packet was generated by a worm, and,
in response to the determination, to block a second data packet sent over the network from the source address.

10. Apparatus according to claim 9, and comprising a memory, which is adapted to store a set of attributes of known worm-generated packets, and wherein the guard is adapted to compare an attribute of the first data packet with the set, and to block the first data packet when the attribute of the first data packet is found to match one of the attributes in the set, wherein the attribute comprises at least one of a length of the data packet and a signature of the packet.

11. Apparatus according to claim 9 or 10, wherein the guard device is adapted to receive multiple TCP SYN packets addressed to multiple, respective destination addresses.

12. Apparatus according to any one of claims 9-11, wherein the guard device is adapted to make the determination by designating one or more addresses as trap addresses, and determining that the destination address of at least the first packet is one of the trap addresses.

13. Apparatus according to claim 12, wherein the guard device is adapted, in response to determining that the destination address of the first data packet is one of the trap addresses, to initiate diversion of further data packets sent over the network from sources outside a protected area of the network, so as to prevent malicious traffic from reaching the protected area of the network.

14. A computer software product for screening packet-based communication traffic, the product comprising a computer-readable medium in which program instructions are stored, which instructions, when read by a computer, cause the computer to perform a method according to any of claims 1 to 8.

## Patentansprüche

1. Verfahren zum Überprüfen von paketbasiertem Kommunikationsverkehr, das Folgendes umfasst:
von Zeit zu Zeit Einleiten einer Umleitung (50) des paketbasierten Kommunikationsverkehrs von einem Router (22) zu einer Schutzvorrichtung (28), um den Verkehr abzutasten oder als Reaktion auf einen erfassten Zustand,
Empfangen an der Schutzvorrichtung mindestens eines ersten Datenpakets, das von einer Quelladresse über ein Netzwerk (40) zu einer Zieladresse gesendet wird;
Ermitteln an der Schutzvorrichtung durch Analyse des ersten Datenpakets, dass das erste Datenpaket von einem Wurm erzeugt wurde, und
als Reaktion auf die Ermittlung, Blockieren (70) an der Schutzvorrichtung eines zweiten Datenpakets, das von der Quelladresse über das Netzwerk gesendet wird.

2. Verfahren nach Anspruch 1, wobei die Ermittlung Folgendes umfasst:
Vergleichen eines Attributs des ersten Datenpakets mit einem Satz von Attributen von bekannten Wurm-erzeugten Paketen; und Blockieren des ersten Datenpakets, wenn das Attribut des ersten Datenpakets mit einem der Attribute in der Gruppe übereinstimmt, wobei das Attribut mindestens eine Länge des Datenpakets oder eine Signatur des Pakets umfasst.

3. Verfahren nach Anspruch 1, wobei das erste Datenpaket eine Port-Bezeichnung aufweist, und wobei die Ermittlung das Ermitteln umfasst, dass die Port-Bezeichnung nicht mit einer Anwendung übereinstimmt, die an der Zieladresse ausgeführt wird.

4. Verfahren nach Anspruch 1, wobei sich ein Server für eine Anwendung an der Zieladresse befindet, und wobei die Ermittlung das Ermitteln umfasst, dass das erste Datenpaket nicht mit der Anwendung übereinstimmt.

5. Verfahren nach Anspruch 1, wobei das Empfangen des ersten Datenpakets das Empfangen eines Internet-Protokoll-Pakets, IP-Pakets, umfasst, und wobei die Ermittlung das Analysieren eines Musters einer Sequenznummer des IP-Pakets umfasst.

6. Verfahren nach einem der Ansprüche 1-6, wobei die Ermittlung das Ermitteln umfasst, dass die Zieladresse ungültig ist.

7. Verfahren nach Anspruch 6, wobei die Ermittlung Folgendes umfasst: Bezeichnen einer oder mehrerer Adressen als Abfangadressen(90) und Ermitteln, dass die Zieladresse eine der Abfangadressen ist.

8. Verfahren nach Anspruch 7, wobei die Blockierung des Datenpakets Folgendes umfasst: Einleiten einer Umleitung (96) weiterer Datenpakete, die von Quellen, die sich außerhalb eines geschützten Bereichs des Netzwerks befinden, über das Netzwerk gesendet werden, als Reaktion auf das Ermitteln, dass die Zieladresse des ersten Datenpakets eine der Abfangadressen ist, um schädlichen Datenverkehr daran zu hindern, den geschützten Bereich des Netzwerks zu erreichen.

9. Vorrichtung zum Überprüfen von paketbasiertem Kommunikationsverkehr, die einen Router (22) und eine Schutzvorrichtung (28) umfasst,
wobei der Router (22) dafür ausgelegt ist, paketbasierten Kommunikationsverkehr von Zeit zu Zeit zu einer Schutzvorrichtung (28) umzuleiten, um den Verkehr abzutasten oder als Reaktion auf einen erfassten Zustand,
und wobei die Schutzvorrichtung (28) dafür ausgelegt ist, mindestens ein erstes Datenpaket zu empfangen, das von einer Quelladresse über ein Netzwerk (40) zu einer Zieladresse gesendet wird, um durch Analyse des ersten Datenpakets zu ermitteln, dass das erste Datenpaket von einem Wurm erzeugt wurde, und
als Reaktion auf die Ermittlung ein zweites Datenpaket, das von der Quelladresse über das Netzwerk gesendet wird, zu blockieren.

10. Vorrichtung nach Anspruch 9, die einen Speicher umfasst, der dafür ausgelegt ist, einen Satz von Attributen von bekannten Wurm-erzeugten Paketen zu speichern, und wobei die Schutzvorrichtung für Folgendes ausgelegt ist:
Vergleichen eines Attributs des ersten Datenpakets mit dem Satz, und Blockieren des ersten Datenpakets, wenn das Attribut des ersten Datenpakets mit einem der Attribute in der Gruppe übereinstimmt, wobei das Attribut mindestens eine Länge des Datenpakets oder eine Signatur des Pakets umfasst.

11. Vorrichtung nach Anspruch 9 oder 10, wobei die Schutzvorrichtung dafür ausgelegt ist, mehrere TCP-SYN-Pakete zu empfangen, die an mehrere entsprechende Zieladressen adressiert sind.

12. Vorrichtung nach einem der Ansprüche 9 - 11, wobei die Schutzvorrichtung dafür ausgelegt ist, die Ermittlung durch Folgendes auszuführen: Bezeichnen einer oder mehrerer Adressen als Abfangadressen, und Ermitteln, dass die Zieladresse von mindestens dem ersten Datenpaket eine der Abfangadressen ist.

13. Vorrichtung nach Anspruch 12, wobei als Reaktion auf das Ermitteln, dass die Zieladresse des ersten Datenpakets eine der Abfangadressen ist, die Schutzvorrichtung dafür ausgelegt ist, eine Umleitung weiterer Datenpakete einzuleiten, die von Quellen, die sich außerhalb eines geschützten Bereichs des Netzwerks befinden, über das Netzwerk gesendet werden, um schädlichen Datenverkehr daran zu hindern, den geschützten Bereich des Netzwerks zu erreichen.

14. Computersoftwareprodukt für das Überprüfen von paketbasiertem Kommunikationsverkehr, wobei das Produkt ein computerlesbares Medium umfasst, in dem Programmanweisungen gespeichert sind, wobei die Anweisungen, wenn sie von einem Computer gelesen werden, bewirken, dass der Computer ein Verfahren nach einem der Ansprüche 1 bis 8 ausführt.

## Revendications

1. Procédé de filtrage de trafic de communication basé sur des paquets, comportant :
de temps en temps, à des fins d'échantillonnage du trafic ou en réponse à une condition détectée, l'étape consistant à initialiser une déviation (50) du trafic de communication basé sur des paquets en provenance d'un routeur (22) jusqu'à un dispositif de garde (28) ;
l'étape consistant à recevoir, au niveau du dispositif de garde, au moins un premier paquet de données envoyé sur un réseau (40) en provenance d'une adresse de source jusqu'à une adresse de destination ;
l'étape consistant à effectuer, au niveau du dispositif de garde, une détermination, en analysant le premier paquet de données, comme quoi le premier paquet de données a été généré par un ver ; et
en réponse à la détermination, l'étape consistant à bloquer (70), au niveau du dispositif de garde, un second paquet de données envoyé sur le réseau en provenance de l'adresse de source.

2. Procédé selon la revendication 1, dans lequel l'étape consistant à effectuer la détermination comporte :
l'étape consistant à comparer un attribut du premier paquet de données par rapport à un ensemble d'attributs de paquets générés par des vers connus ; et l'étape consistant à bloquer le premier paquet de données quand l'attribut du premier paquet de données s'avère correspondre à l'un des attributs dans l'ensemble, dans lequel l'attribut comporte au moins l'une parmi une longueur du paquet de données et une signature du paquet.

3. Procédé selon la revendication 1, dans lequel le premier paquet de données a une désignation de port, et dans lequel l'étape consistant à effectuer la détermination comporte l'étape consistant à déterminer que la désignation de port ne correspond pas à une application s'exécutant au niveau de l'adresse de destination.

4. Procédé selon la revendication 1, dans lequel un serveur pour une application réside au niveau de l'adresse de destination, et dans lequel l'étape consistant à effectuer la détermination comporte l'étape consistant à déterminer que le premier paquet de données ne correspond pas à l'application.

5. Procédé selon la revendication 1, dans lequel l'étape consistant à recevoir le premier paquet de données comporte l'étape consistant à recevoir un paquet de protocole Internet, ou IP, et dans lequel l'étape consistant à effectuer la détermination comporte l'étape consistant à analyser une configuration du numéro de séquence du paquet IP.

6. Procédé selon l'une quelconque des revendications 1 à 6, dans lequel l'étape consistant à effectuer la détermination comporte l'étape consistant à déterminer que l'adresse de destination n'est pas valide.

7. Procédé selon la revendication 6, dans lequel l'étape consistant à effectuer la détermination comporte l'étape consistant à désigner une ou plusieurs adresses comme adresses de piège (90), et l'étape consistant à déterminer que l'adresse de destination est l'une des adresses de piège.

8. Procédé selon la revendication 7, dans lequel l'étape consistant à bloquer le paquet de données comporte, en réponse à l'étape consistant à déterminer que l'adresse de destination du premier paquet de données est l'une des adresses de piège, l'étape consistant à initialiser une déviation (96) d'autres paquets de données envoyés sur le réseau en provenance de sources se trouvant en dehors d'une zone protégée du réseau, de manière à empêcher tout trafic malveillant d'atteindre la zone protégée du réseau.

9. Appareil de filtrage de trafic de communication basé sur des paquets, comportant un routeur (22) et un dispositif de garde (28),
dans lequel le routeur (22) est adapté à des fins de déviation, de temps en temps, à des fins d'échantillonnage du trafic ou en réponse à une condition détectée, du trafic de communication basé sur des paquets jusqu'à un dispositif de garde (28), et le dispositif de garde (28) est adapté pour
recevoir au moins un premier paquet de données envoyé sur un réseau (40) en provenance d'une adresse de source jusqu'à une adresse de destination, pour effectuer une détermination, en analysant le premier paquet de données, comme quoi le premier paquet de données a été généré par un ver, et,
en réponse à la détermination, bloquer un second paquet de données envoyé sur le réseau en provenance de l'adresse de source.

10. Appareil selon la revendication 9, et comportant une mémoire, qui est adaptée pour stocker un ensemble d'attributs de paquets générés par des vers connus, et dans lequel le garde est adapté pour comparer un attribut du premier paquet de données par rapport à l'ensemble, et pour bloquer le premier paquet de données quand l'attribut du premier paquet de données s'avère correspondre à l'un des attributs dans l'ensemble, dans lequel l'attribut comporte au moins l'une parmi une longueur du paquet de données et une signature du paquet.

11. Appareil selon la revendication 9 ou 10, dans lequel le dispositif de garde est adapté pour recevoir de multiples paquets TCP SYN adressés à de multiples adresses de destination respectives.

12. Appareil selon l'une quelconque des revendications 9 à 11, dans lequel le dispositif de garde est adapté pour effectuer la détermination en désignant une ou plusieurs adresses comme adresses de piège, et en déterminant que l'adresse de destination d'au moins le premier paquet est l'une des adresses de piège.

13. Appareil selon la revendication 12, dans lequel le dispositif de garde est adapté, en réponse à l'étape consistant à déterminer que l'adresse de destination du premier paquet de données est l'une des adresses de piège, pour initialiser une déviation d'autres paquets de données envoyés sur le réseau en provenance de sources se trouvant en dehors d'une zone protégée du réseau, de manière à empêcher tout trafic malveillant d'atteindre la zone protégée du réseau.

14. Produit informatique d'ordinateur à des fins de filtrage de trafic de communication basé sur des paquets, le produit comportant un support lisible par un ordinateur dans lequel des instructions de programme sont stockées, instructions qui, quand elles sont lues par un ordinateur, entraînent l'ordinateur à réaliser un procédé selon l'une quelconque des revendications 1 à 8.
